# EUROPÄISCHE PATENTSCHRIFT

(11) **EP 0 770 943 B1**
(45) Veröffentlichungstag und Bekanntmachung des Hinweises auf die Patenterteilung: **24.02.1999**
(21) Anmeldenummer: 96116745.9
(22) Anmeldetag: 18.10.1996
(51) Int. Cl.: G05B 23/02, G05B 13/02

(54) **Verfahren zur automatischen Generierung von Regelkreisen**
Method for automated generation of control circuits
Procédé pour la génération automatique de circuits de réglage

(30) Priorität: 24.10.1995 DE 19539476
(43) Veröffentlichungstag der Anmeldung: 02.05.1997
(73) Patentinhaber: ABB PATENT GmbH, 68309 Mannheim (DE)
(72) Erfinder: Vollmer, Gerhard, 69181 Leimen (DE); Rupp, Olaf, 68519 Viernheim (DE); Schmiega, Manfred, 67295 Bolanden (DE)
(74) Vertreter: Rupprecht, Klaus, Dipl.-Ing.

(56) Entgegenhaltungen:
- EP-A- 0 384 910
- EP-A- 0 626 697

## Beschreibung

Die Erfindung bezieht sich auf ein Verfahren zur automatischen Generierung von Regelkreisen für eine konkrete leittechnische Aufgabe.

Das Generieren von Regelkreisen ist als Teil eines Planungssystems aufzufassen, wobei für einen konkreten Prozeß oder Teilprozeß, z.B. für das Speisewassersystem einer Kraftwerksanlage,
a) ein verfahrenstechnisches Schema zu erstellen ist,
b) leittechnische Strukturen zu generieren sind,
c) Regelkreise zu generieren sind und
d) meßtechnische Auslegung vorzunehmen ist.

Das Verfahren zur Generierung von Regelkreisen setzt auf einem gegebenen verfahrenstechnischen Schema auf, das hierarchisch in Baugruppen strukturiert ist. Das Schema und die Baugruppen beinhalten einzelne verfahrenstechnische Komponenten, z.B. Kreiselpumpe oder Absperrschieber, die miteinander mit Leitungen verbunden sind. Die Leitungen sind mit einer Richtungsinformation versehen, die die Flußrichtung des Prozeßmediums, z.B. für Dampf, beinhaltet. Jede Komponente des Schemas besitzt einen Datensatz, der die zugehörigen Eigenschaften beschreibt, z.B. die Eigenschaft Meßart einer Messung = Druckmessung.

Es wird außerdem vorausgesetzt, daß für Komponenten der Regelungskreise leittechnische Aufgaben formuliert sind. Die in den leittechnischen Aufgaben beinhalteten Suchanfragen benötigen Verweise auf die Komponenten des Schemas, die bei der Suchanfrage als Start- bzw. Endkomponente herangezogen werden. Diese Verweise sind Bestandteil der Komponenten-Datensätze. Ein verfahrenstechnisches Schema, das die genannten Eigenschaften aufweist, kann z.B. nach dem in der korrespondierenden europäischen Patentanmeldung "Verfahren zum automatischen Erstellen eines verfahrenstechnischen Schemas", Veröffentlichungsnummer EP 0 770 945 A1 beschriebenen Verfahren bereitgestellt werden.

Die auf das verfahrenstechnische Schema bezogenen leittechnischen Aufgaben der Regelung müssen für die Realisierung in der Prozeßleittechnik aufbereitet werden. Das bedeutet einen Aufbau von leittechnischen Strukturen der Regelkreise, die in Form von grafischen Regelschemata dargestellt werden.

Die Regelkreise sind auf die verfahrenstechnischen Stellglieder (Aktoren) der Regelaufgaben, z.B. auf Regelventile bezogen, die mit der relevanten verfahrenstechnischer Regelstrecke dargestellt werden. Die Regelkreise beinhalten weiter die leittechnische Lösung der Regelaufgabe und die erforderlichen Messungen (Sensoren). Dabei werden die Aktoren, Sensoren sowie die Regelstrecke dem konkreten Schema angepaßt.

Mit dem Verfahren sollen lediglich Regelkreise der Funktions-Einzelebene (Einzel-Regelkreise) der Aktoren erfaßt werden. Komplexe Regelkreise der Führungsebene, wie z.B. die Brennstoff-Führungsregelung, sind in Kraftwerksanlagen nur in kleiner Anzahl erforderlich. Sie müssen nicht automatisch generiert werden, da hierzu eine projektspezifische Aufarbeitung der Regelungsaufgaben erforderlich ist.

Bisher werden die Einzel-Regelkreise von Planern oder Planungsteams durch aufwendige Erfassung und Umsetzung von Anforderungen des, in verfahrenstechnischen Unterlagen beschriebenen technischen Prozesses, unter Beachtung von Planungsrichtlinien, z.B. VGB (Vereinigung der Großkraftwerksbetreiber) erstellt. Die Ergebnisse werden entweder unabhängig vom konkreten Prozeßleitsystem formuliert oder direkt in einem konkreten Prozeßleitsystem realisiert. Die Möglichkeit einer direkten variablen wiederholten Nutzung der Planungsergebnisse ist in beiden Fällen nicht gegeben.

Diese Vorgehensweise erfordert in jedem Projekt einen intensiven und zeitaufwendigen Einsatz von hochqualifizierten Planungsingenieuren; die Qualität der Ergebnisse ist vom jeweiligen Planer abhängig und läßt sich nur stichprobenweise prüfen.

Es entsteht somit Bedarf an einem variablen und rationellen Verfahren zur Generierung von Regelkreisen, das zugleich zu qualitativ besseren und besser prüfbaren Ergebnissen führt.

Der Erfindung liegt die Aufgabe zugrunde, ein Verfahren anzugeben, das eine automatisierte Generierung von Regelkreisen ermöglicht.

Diese Aufgabe wird gelöst durch ein Verfahren mit den in Anspruch 1 angegebenen Merkmalen zur automatischen Generierung von Regelkreisen. Vorteilhafte Ausgestaltungen sind in weiteren Ansprüchen angegeben und den weiter unten beschriebenen Ausführungsbeispielen zu entnehmen.

Die erfindungsgemäße Generierung von leittechnischen Strukturen hat eine Reihe von Vorteilen : Die Produktivität wird erhöht, die Planungszeit verkürzt, die Qualität und die Prüfbarkeit verbessert. Die nach dem Verfahren generierten Regelkreise sind anwendbar im Rahmen eines umfangreichen Planungssystems für Kraftwerksleitsysteme. Das Verfahren generiert reproduzierbare Ergebnisse, d.h. für das gleiche verfahrenstechnische Schema ergeben sich in jedem Fall die gleichen Regelkreise. Die Ergebnisdaten sind vom konkreten Prozeßleitsystem unabhängig und können anschließend zu einem konkreten Prozeßleitsystem transferiert und in produkt- oder herstellerspezifische Lösungen automatisch umgesetzt werden.

Die automatisierte Generierung von Regelkreisen erfolgt unter Verwendung einer abstrakt formulierten Vorgabe, die unter Einsatz eines Expertensystems an ein konkretes Verfahrensschema automatisch angepaßt wird.

Ein Expertensystem kann nicht nur wie herkömmliche Programme Daten nach einer vorgefertigten Befehlsfolge verändern, sondern auch einen Satz von vorgegebenen Regeln auf einen Datenbestand anwenden. Das Expertensystem wählt die gültigen Regeln selbständig aus und wendet sie an, bis es ein Ergebnis erreicht, das alle geltenden Regeln erfüllt. Dabei wird eine feste Vorgehensweise und ein festes Regelwerk verfolgt, so daß die Ergebnisse immer reproduzierbar und nachvollziehbar begründet sind.

Die regelungstechnischen Aufgaben der Einzel-Regelkreise können in einer allgemeingültigen Grundstruktur erfaßt werden, die bei Bedarf durch Zusatzfunktionen ergänzt wird. Das Wissen über die Umsetzung der regelungstechnischen Aufgaben in Regelkreise wird in abstrakter Form abgelegt. Zur Konkretisierung werden allgemeinformulierte Anwendervorgaben für Stellglied, Reglertyp, Sollwert, Istwert und bei Bedarf Zusatzaufgaben, wie z.B. Maximalwert-(MAX-)Begrenzung für Sollwert, benötigt.

Das Verfahren zur automatischen Generierung von Regelkreisen wird nachstehend anhand eines in den Zeichnungsfiguren dargestellten Ausführungsbeispiels weiter erläutert.

Es zeigt
- Fig. 1: Übersichtsbild zur automatischen Generierung von Regelkreisen,
- Fig. 2a: Allgemeingültige Grundstruktur für Einzel-Regelkreise,
- Fig. 2b: Beispiel für Grundstruktur einer Zusatz-Regelungsaufgabe,
- Fig. 3: Verfahren zur automatischen Generierung von Regelkreisen,
- Fig. 4: Verfahren zur grafischen Darstellung eines Regelkreises,
- Fig. 5: Verfahren zur automatischen Anordnung von leittechnischen Bausteinen,
- Fig. 6: Beispiel eines verfahrenstechnischen Schemas,
- Fig. 7: Beispiel eines automatisch generierten Regelkreises.

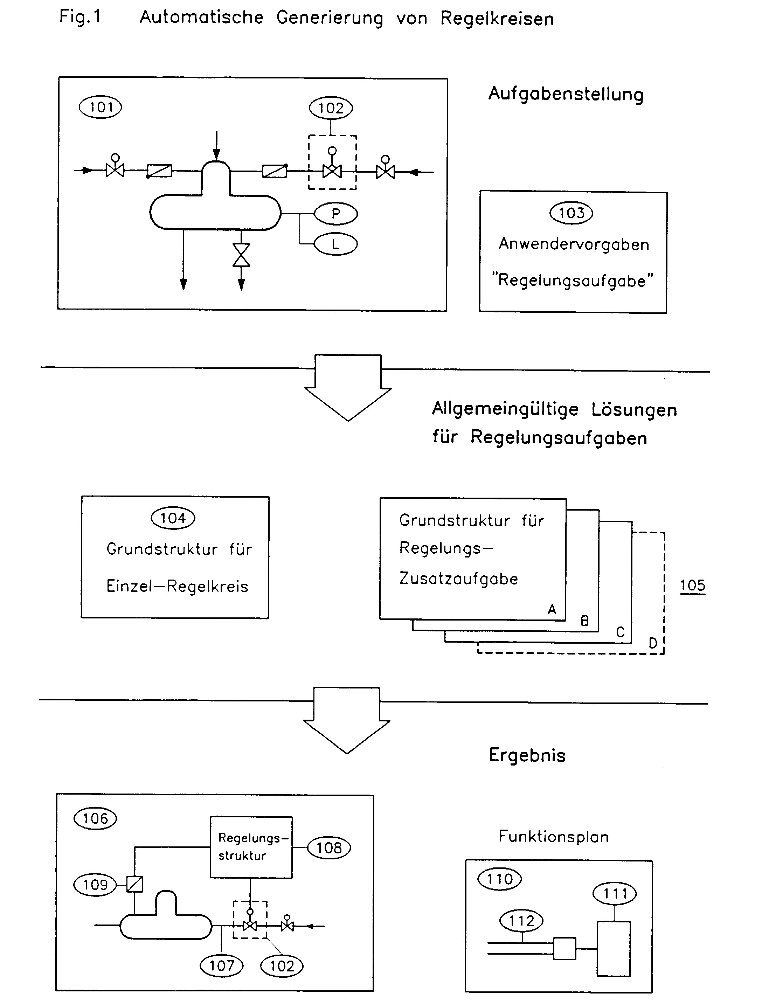

In Fig. 1 ist die verfahrensgemäße Vorgehensweise in einer Gesamtübersicht zeichnerisch dargestellt.

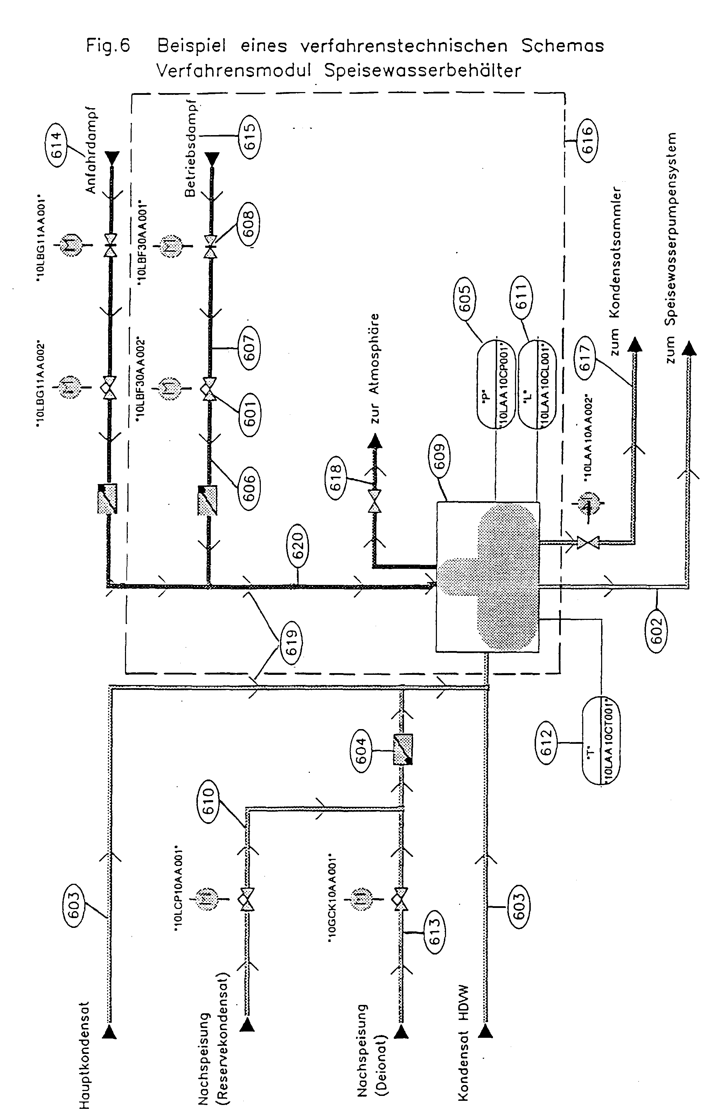

Im obersten Drittel der Figur sind die Bestandteile der Aufgabenstellung zu erkennen. Ein konkretes verfahrenstechnisches Schema 101 stellt einen Teilprozeß, in dem sich der Aktor (Regelventil) 102 der Regelungsaufgabe befindet, dar. Die verfahrenstechnischen Komponenten besitzen zur Erkennung jeweils einen Datensatz der Eigenschaften und die verbindenden Leitungen sind mit MedienflußrichtungInformation versehen. Ein Beispiel für ein solches verfahrenstechnisches Schema ist in der Fig. 6 dargestellt. In der Anwendervorgabe 103 der Fig. 1 wird die Regelungsaufgabe festgelegt.

Das mittlere Drittel der Fig. 1 beinhaltet allgemeingültige Grundstrukturen, die zur Lösung von Regelungsaufgaben dienen. Die Grundstruktur für einen Einzel-Regelkreis 104 ist für jede Regelungsaufgabe der Einzel-Regelkreise die Basisstruktur, die durch diverse Grundstrukturen der Zusatzaufgaben 105 ergänzt werden kann.

Das untere Drittel der Fig. 1 zeigt das Ergebnis des verfahrensgemäßen Ablaufs. Die Generierung der Regelkreise erfolgt auf Grund der Aufgabenstellung des konkreten verfahrenstechnischen Schemas 101 mit den Anwendervorgaben 103 und dem abgelegten allgemeingültigen Wissen über Lösungen der Regelungsaufgaben in Form von Grundstrukturen 104, 105. Die Konkretisierung eines Regelkreises 106 läuft nach Regeln ab, die zur Suche der Komponenten im verfahrenstechnischen Schema 101, ihrer Anordnung und Verbindung, sowie dem Aufbau einer Regelungsstruktur 108 und ihrer Anbindung an die Regelstrecke dienen. Der Regelkreis 106 beinhaltet eine verfahrenstechnische Regelstrecke 107 mit einem Regelventil (Aktor) 102, die Regelungsstruktur 108 und eine Istwertmessung (Sensor) 109.

Die in der Regelungsstruktur 108 realisierte Regelungsaufgabe regelt die betrieblichen Zustände und reagiert ggf. auf verfahrenstechnische Störeinflüße des verfahrenstechnischen Teilprozesses. Bei Störungen der Hardware, d.h. der Meßwerterfassung (Istwert und Reglerposition) wird die Regelung auf "Hand" geschaltet, um dadurch eine definierte Stellung des Regelventiles und der Regelung zu erreichen. In der verfahrensgemäßen Vorgehensweise werden aus dem konkretisierten Regelkreis 106 die genannten Störsignale einer Hardware 112 generiert und in einem getrennten Funktionsplan 110 mit einem Baustein der Antriebsfunktion 111 (Regelstrecke) dargestellt.

Eine detaillierte Beschreibung eines konkreten Beispieles erfolgt weiter unten anhand der Fig. 6.

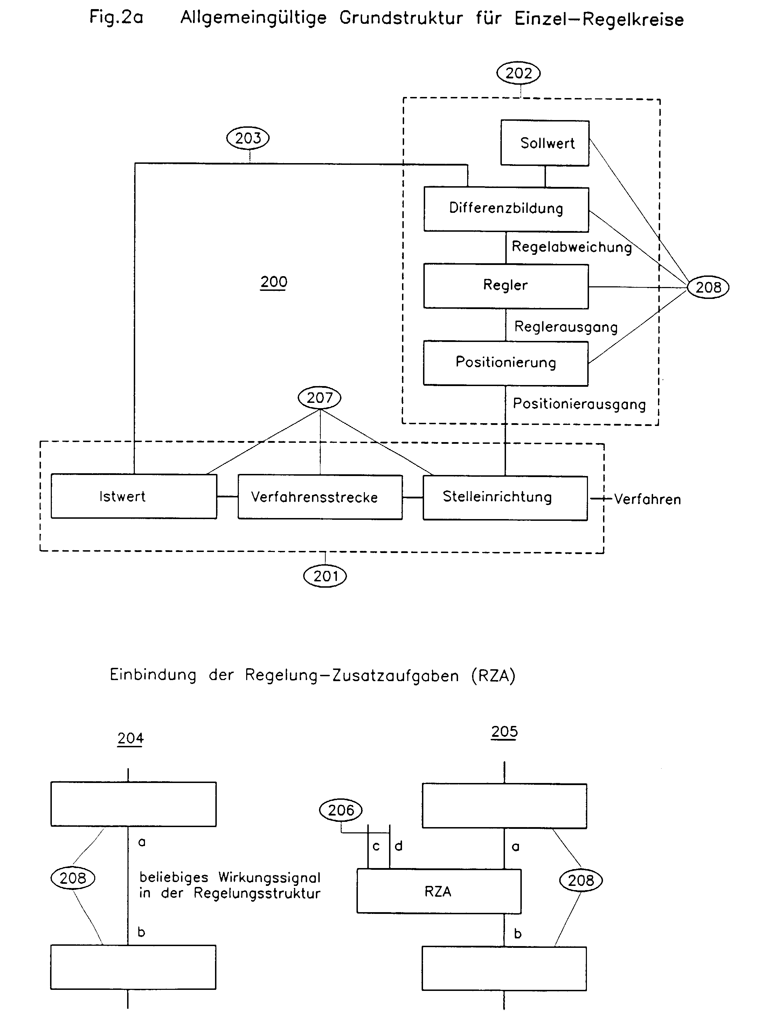

In Fig. 2a ist die allgemeingültige Grundstruktur für Einzel-Regelkreise dargestellt. Sie besteht aus
- Komponenten 207 der Regelstrecke 201: Stellglied, Komponenten der Verfahrensstrecke, Istwertmessung,
- Funktionsbausteinen 208 der Regelungsstruktur 202: Positionierung, Regler, Differenzbildung und Sollwertvorgabe,
- Verbindungen der verfahrenstechnischen und leittechnischen Zusammenhänge:
   besonders die Verbindung 203 von der Istwert-Erfassung zur Differenzbildung.

Die Regelungs-Grundstruktur ist für einfache Regelungsaufgaben der Einzel-Regelkreise geeignet. In vielen Fällen wirken auf die Regelstrecke zusätzliche Störeinflüsse, die durch entsprechende Erweiterung der Regelungs-Grundstruktur 202 beherrscht werden müssen. Diese Anforderung wird je nach Aufgabenstellung durch Regelungs-Zusatzaufgaben (RZA) realisiert. Die verfahrensgemäße Vorgehensweise ermöglicht es, ein beliebiges Wirksignal 204 einer Regelungsstruktur 202 zu unterbrechen, um zwischen den Ausgang (a) eines Bausteins 208 der Grundstruktur 202 und den Eingang (b) des nachfolgenden Bausteins 208 eine RZA einzufügen, wie unter Bezugszeichen 205 dargestellt. Die RZA verfügt zusätzlich über einen oder mehrere Eingänge 206 (c, d), z.B. für Istwert der Zusatzaufgabe, die für die Realisierung der Aufgabe erforderlich sind.

Bei der Konkretisierung wird die Anwendervorgabe (vergl. Fig. 1, Regelungsaufgabe 103) in die Regelungsstruktur nach wissensbasierten Regeln umgesetzt. Die Anwendervorgabe beinhaltet für die Grundstruktur der Einzel-Regelkreise :
- Istwert, z.B. eine Prozeßmessung,
- Sollwert, z.B. eine Festvorgabe,
- Stellglied, z.B. ein Regelventil,
- Reglertyp, z.B. Pl-Regler,
- Wirkung des Istwertsignals auf die Regelabweichung (größer, kleiner).

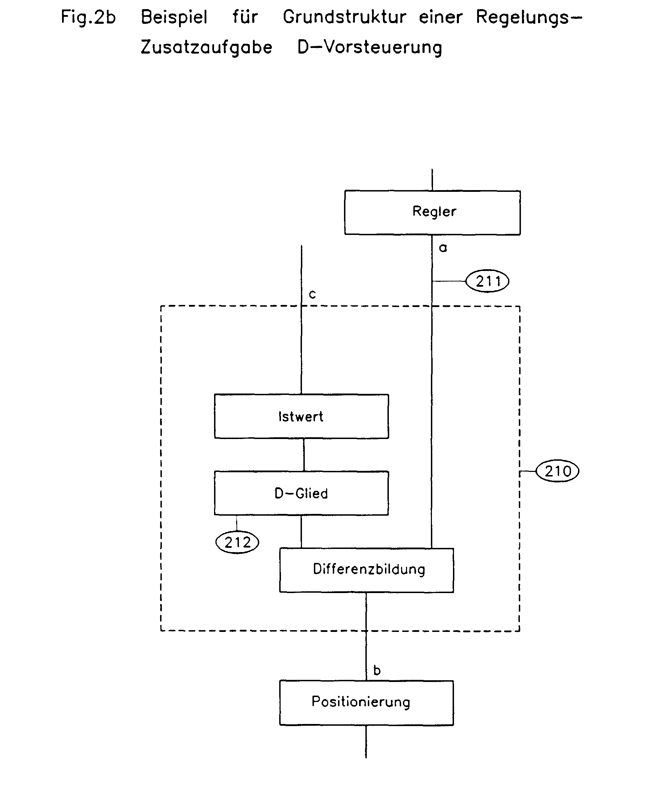

In Fig. 2b ist ein Beispiel der Grundstruktur einer Zusatzaufgabe 210 "D-Vorsteuerung" dargestellt. Das Wirksignal "Reglerausgang" 211 wird durch Vorsteuerung mit D-Regelfunktion beeinflußt.

Für die Zusatzaufgaben ist ähnlich wie in Fig. 2a jeweils eine der Funktion entsprechende Anwendervorgabe 103 gegeben, z.B. für die in Fig. 2b dargestellten D-Vorsteuerung :
- Istwert der Zusatzaufgabe, z.B. eine Prozeßmessung,
- Wirksignal in der Regelungsstruktur, z.B. Reglerausgang,
- Wirkung der Zusatzaufgabe auf das Wirksignal (größer, kleiner).

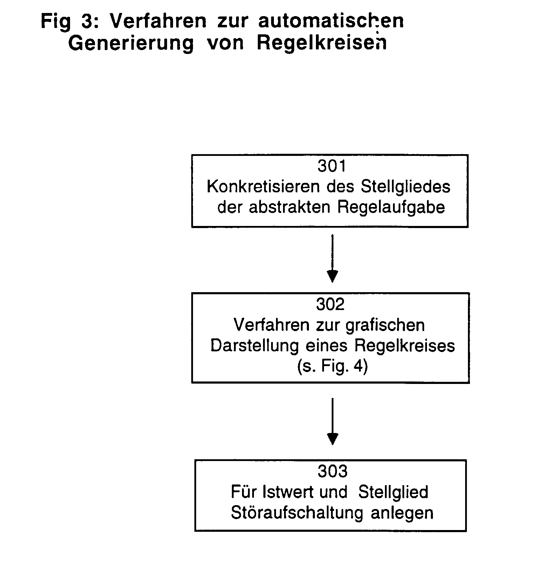

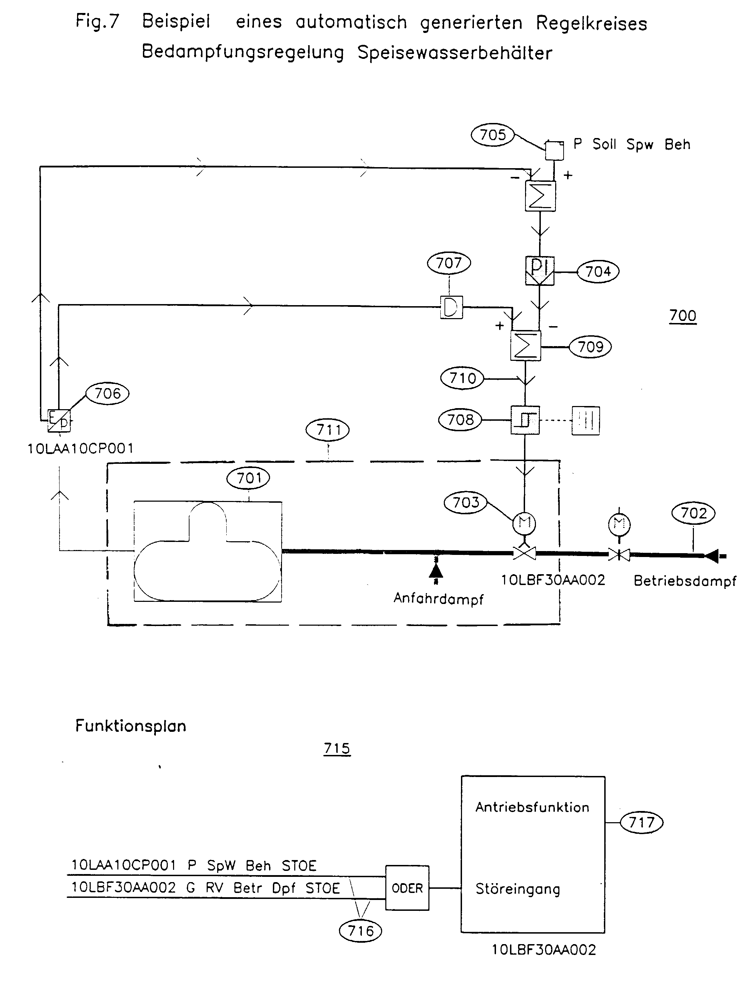

Anhand der Fig. 3 bis 5, die im Zusammenhang zu betrachten sind, wird der Ablauf des Verfahrens zur Generierung von Regelkreisen ausführlicher beschrieben. Dabei wird auch auf das in Fig. 6 gezeigte verfahrenstechnische Schema und den in Fig. 7 gezeigten Regelkreis Bezug genommen.

Im Bearbeitungsschritt 301 der Fig. 3 wird anhand der Anwendervorgabe 103 (Fig. 1) ein Verweis der Regelaufgabe auf ein Stellglied im verfahrenstechnischen Schema hergestellt. Fig. 6 zeigt solch ein Schema am Beispiel Speisewasserbehälter mit dem Stellglied der Regelaufgabe für die Betriebsbedampfung 601.

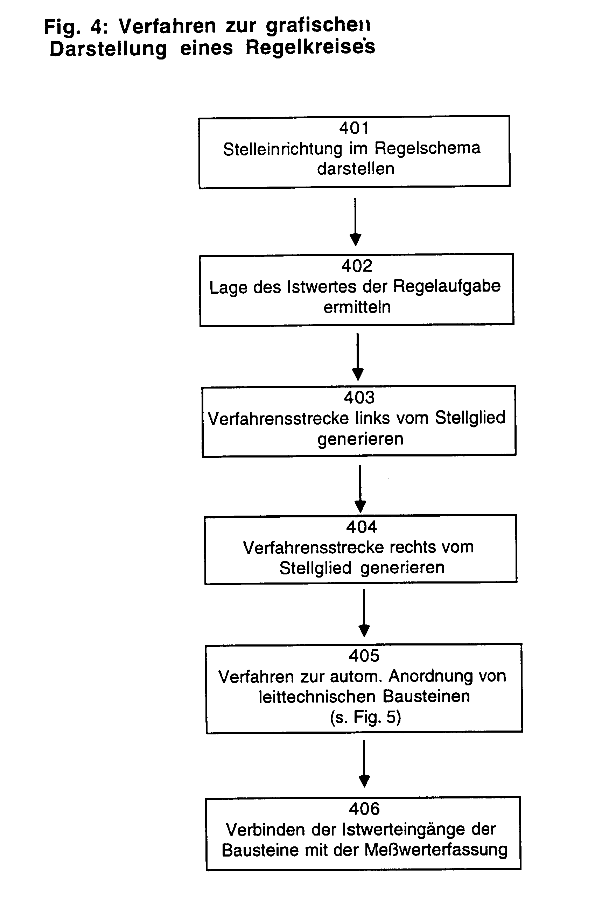

Der Arbeitsschritt 302 der Fig. 3, das Verfahren zur grafischen Darstellung des Regelkreises, ist in Fig. 4 weiter detalliert. In Arbeitsschritt 401 der Fig. 4 wird eine grafische Repräsentation eines Stellgliedes 703 (Fig. 7) im Regelschema plaziert.

Jede Regelaufgabe besitzt einen Istwert. Der Istwert der Regelaufgabe verweist auf eine Meßstelle, z.B. 605 (Fig. 6) im konkreten Verfahrensschema. Im Regelschema ist die Meßstelle durch das Symbol eines Meßaufnehmers 706 (Fig. 7) repräsentiert. Dieser Meßaufnehmer wird immer links vom Stellglied plaziert. Deshalb wird in Arbeitsschritt 402 der Fig. 4 die Lage der Meßstelle in dem konkreten Verfahrensschema ermittelt. Die Lage wird dadurch ermittelt, daß im verfahrenstechnischen Schema ausgehend vom Stellglied die Meßstelle des Istwertes gesucht wird. Die Meßstelle des Istwertes kann demnach entweder in Flußrichtung 606 (Fig. 6) oder in Gegenflußrichtung 607 (Fig. 6) liegen. Die Suche erfolgt derart, daß die Meßstellen entlang von Rohrleitungen und an Komponenten , z.B. die Meßstellen 605, 611 und 612, dahingehend überprüft werden, ob sie mit der Meßstelle des Istwertes identisch sind.

Im Arbeitsschritt 403 der Fig. 4 wird die Verfahrensteilstrecke zwischen dem Stellglied und der Meßstelle des Istwertes im Regelschema ausgehend vom Stellglied nach links entwickelt. Je nach Lage der Meßstelle wird der Medienfluß in der Verfahrensstrecke entweder in Flußrichtung oder in Gegenflußrichtung durchlaufen. Damit das Regel schema übersichtlich bleibt, werden in der Verfahrensstrecke nur diejenigen Komponenten dargestellt, die bestimmte Kriterien erfüllen. Beispielsweise sind solche Komponenten Ventile, die von der Leittechnik angesteuert werden, z.B. 608, oder große Komponenten, wie Behälter 609 (Fig. 6). Im Regelschema werden diese Komponenten auf einer horizontalen Linie in einem festen Abstand voneinander plaziert und entsprechend der Verbindungen im Verfahrensschema (z.B. Rohrleitung) miteinander verbunden. Die Verfahrensstrecke wird nach Plazierung des Meßaufnehmers des Istwertes mit einer Komponente mit Abbruchkriterien beendet, z.B. ein Behälter 701 (Fig. 7).

Im Arbeitsschritt 404 der Fig. 4 wird nun vom Stellglied aus die in entgegengesetzter Richtung liegende Verfahrensteilstrecke entwickelt. Der Arbeitsschritt wird nach Erreichen einer Komponente mit Abbruchkriterien beendet.

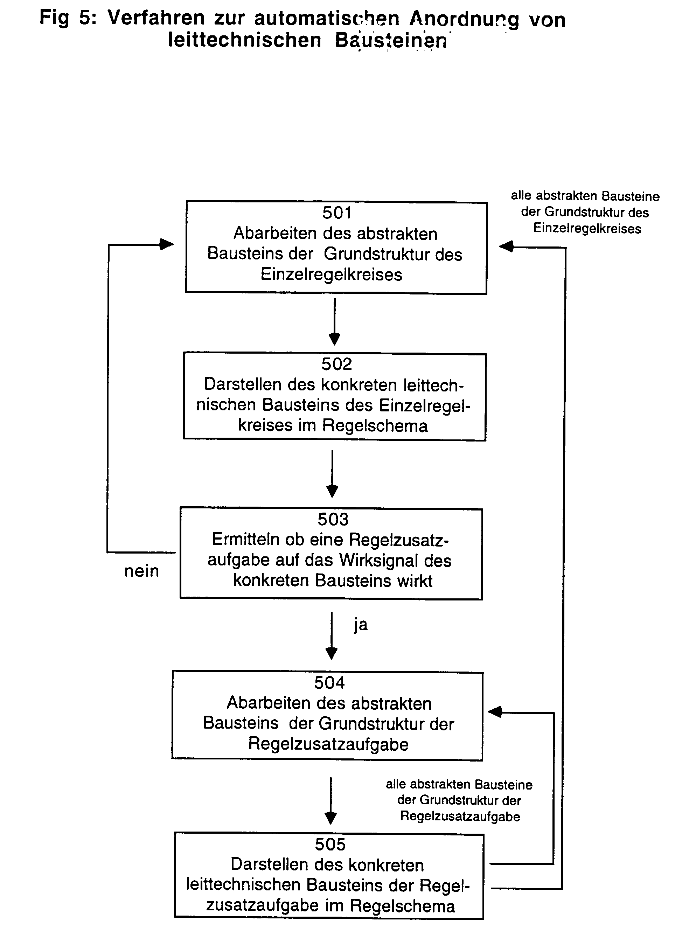

Arbeitsschritt 405 der Fig. 4, die automatische Anordnung von leittechnischen Bausteinen, wird in Fig. 5 im Detail beschrieben. Fig. 2a zeigt die abstrakte Grundstruktur des Einzelregelkreises. Im Arbeitsschritt 501 der Fig. 5 werden schrittweise für die abstrakten Bausteine Positionierung, Regler und Differenzbildung entsprechend gegebener Randbedingungen aus dem Verfahrensschema und Anwendervorgaben 104 die konkreten leittechnischen Bausteine ermittelt. Der Sonderfall, daß die Arbeitsschritte 501 und 502 in Fig. 5 überlaufen werden, tritt dann ein, wenn für das Wirksignal Positionierausgang eine Regelzusatzaufgabe definiert ist.

Im Arbeitsschritt 502 der Fig. 5 werden die konkreten Bausteine (z.B. 708 und 709) auf einer Senkrechten vom Stellglied aus nach oben in einem festen Abstand voneinander plaziert und mit gerichteten Verbindungen 710 verbunden (vergl. Fig. 7).

Im Arbeitsschritt 503 der Fig. 5 wird überprüft, ob auf das Wirksignal des zuletzt konkretisierten leittechnischen Bausteins eine Regelungszusatzaufgabe wirkt, wie beispielsweise D-Vorsteuerung in Fig. 2b. Ist der Wirkort in der Anwendervorgabe der Zusatzaufgabe definiert, dann wird sie in den Arbeitsschritten 504 und 505 der Fig. 5 konkretisiert. Wirkt dagegen auf das Wirkungssignal des leittechnischen Bausteins keine Zusatzaufgabe, wird zur Abarbeitung des nächsten abstrakten Bausteins der Grundstruktur zu Arbeitsschritt 501 zurückgesprungen.

Wie in den Arbeitsschritten 501 und 502 für die Grundstruktur des Einzelregelkreises beschrieben, werden in den Arbeitsschritten 504 und 505 für die abstrakten Bausteine der Grundstruktur der Zusatzaufgaben die konkreten leittechnischen Bausteine ermittelt und im Regelschema plaziert. Soll aus optischen Gründen der Baustein 707 (Fig. 7) abweichend von der Senkrechten plaziert werden, dann ist diese Information im abstrakten Baustein 212 (Fig. 2b) vorgegeben.

Wenn sämtliche leittechnischen Bausteine im Regel schema angeordnet sind, werden in Arbeitsschritt 406 der Fig. 4 die leittechnischen Bausteine, die ein Meßsignal aus der Verfahrensstrecke benötigen, mit den entsprechenden Meßaufnehmern verbunden.

Im Arbeitsschritt 303 der Fig. 3 werden die Störmeldungen sämtlicher Istwerte des Regelkreises und der Positionsmessung des Stellgliedes auf einen ODER-Baustein geschaltet, der wiederum auf den Störeingang der Antriebsfunktion des Stellgliedes 717 (Fig. 7) aufgeschaltet wird. Diese Logikschaltung gründet sich auf eine Planungsvorschrift.

In Fig. 6 ist ein Beispiel eines verfahrenstechnischen Schemas 606 dargestellt, welches als Basis zur Generierung eines Regelkreises dienen kann.

Der dargestellte SpWB 609 dient im Kraftwerk als Pufferbehälter zum Ausgleich von kurzzeitigen Massenstromdifferenzen zwischen Speisewasserbedarf 602 und Kondensatrückfluß 603. Die Wasserverluste im Kreislauf werden durch Nachspeisung über Regelventile und eine Rückschlagklappe 604 mit Reservekondensat 610 oder Deionat 613 ausgeglichen. Die Speisewasseranwärmung erfolgt durch Einleitung von Anfahrdampf 614 oder Betriebsdampf 615, jeweils über einen Absperrschieber, ein Regelventil und eine Rückschlagklappe. Für den sicheren Betrieb des SpW-Behälters sorgen weiter die Einrichtungen zur Überlaufsicherung 617 und Entgasung 618.

Das Schema beinhaltet die, für die Automatisierung erforderlichen Messungen für Druck 605, Niveau 611 und Temperatur 612 des SpWB. Armaturen, die automatisiert werden, sind mit Motoren ausgerüstet, z.B. Absperrschieber für Betriebsdampf 608. Nichtautomatisierte aber zum Verständnis des verfahrenstechnischen Prozesses wichtige Komponenten sind ebenfalls dargestellt, z.B. die Rückschlagklappe 604. Die Medien-Flußrichtung in den Verbindungen (Rohrleitungen) ist durch Pfeile 619 gekennzeichnet.

Die Regelungsaufgabe der betrieblichen Bedampfung des SpWB betrifft die Regelstrecke 616 vom Betriebsdampfeintritt 615 über Absperrschieber 608 und Regelventil 601 zum SpWB 609. Mit 606 ist die Flußrichtung und mit 607 die Gegenflußrichtung (vom Regelventil aus betrachtet) bezeichnet.

In Fig. 7 ist ein Beispiel für einen automatisch erstellten Regelkreis als Regelschema 700 dargestellt. Das Beispiel beinhaltet eine Variante der Bedampfungsregelung für Speisewasserbehälter 701 (SpWB) in dem die, für die Regelstrecke wichtigen verfahrenstechnischen Komponenten dargestellt sind. Das Beispiel ist auf das in der Fig. 6 dargestellte verfahrenstechnische Schema bezogen.

Die Speisewasseranwärmung erfolgt durch Einleitung von Betriebsdampf 702 über einen Absperrschieber und ein Regelventil 703 (Aktor des Regelkreises). Die Bedampfungsregelung mit Pl-Regler 704 erfolgt während des Betriebes mit fest eingestelltem Sollwert 705. Als Regelgröße (Istwert) wird der gemessene Druck 706 am SpWB verwendet. Druckänderungen, insbesondere Druckabsenkungen, werden dem Regler über ein D-Glied 707 additiv als Störgröße aufgeschaltet, um einer zu schnellen Druckänderung entgegen zu wirken.

Das Regelschema 700 ist nach der verfahrensgemäßen Vorgehensweise entstanden, wobei die Grundstrukturen für den Einzel-Regelkreis und die Zusatzfunktion der D-Vorsteuerung für den Aufbau der Regelungsstruktur herangezogen wurden.

Erfaßte Störungen der für die Regelung benötigten Messungen schalten den Regler auf "Hand". Diese Aufgabe ist als Ergebnis im Funktionsplan 715 erfaßt. Die Störsignale der relevanten Meßwerterfassung 716 (Istwert und Reglerposition) werden über eine ODER-Funktion auf den Störeingang der Antriebsfunktion 717 des Regelventiles geschaltet.

Die Textbezeichnungen und die Kennzeichnung, z.B. nach Kraftwerks - Kennzeichnungssystem KKS werden aus den Datensätzen des konkreten verfahrenstechnischen Schemas entnommen.

## Patentansprüche

1. Verfahren zur automatischen Generierung von Einzel-Regelkreisen (106) der Funktionseinzelebene eines technischen Prozesses oder Teilprozesses, insbesondere eines Kraftwerksprozesses, sowie zur grafischen Darstellung der Regelkreise (106) in Regelschemata (700), unter Einsatz einer Datenverarbeitungseinrichtung und eines darin gespeicherten Expertensystems, wobei
a) aufgesetzt wird auf einem konkreten verfahrenstechnischen Schema (101,600) für den technischen Prozeß, das eine verfahrenstechnische Regelstrecke (107) mit Komponenten (z.B. 102,601,605,609,611) enthält, denen jeweils ein Datensatz zur Beschreibung ihrer Eigenschaften zugeordnet ist, und das Verbindungsleitungen (620) mit einer Medienflußrichtungs-Information (619) enthält,
b) das Expertensystem eine abstrakte Beschreibung (104,200) wenigstens eines Einzel-Regelkreises, sowie Regeln zur Generierung eines darauf basierenden konkreten Regelkreises (106) enthält, wobei die abstrakte Regelkreis-Beschreibung (z.B. 200) enthält:
- eine Regelstrecke (201) mit Komponenten (207), wie z.B. Stellglied, Komponenten der Verfahrensstrecke, Istwertmessung,
- Funktionsbausteine (208) einer Regelungsstruktur (202), wie z.B. Positionierung, Regler, Differenzbildung und Sollwertvorgabe, und
- Verbindungen (z.B. 203) der verfahrenstechnischen und leittechnischen Zusammenhänge,
c) Anwendervorgaben (103) vorliegen, die Regelungsaufgaben definieren, mit Angaben für Istwert (z.B. einer Prozeßmessung), Sollwert (z.B. als Festvorgabe), Stellglied (z.B. ein Regelventil), Reglertyp (z.B. Pl-Regler), und Wirkung des Istwertsignals auf die Regelabweichung (z.B. "größer", "kleiner"), und
d) in nachstehenden Schritten die Umsetzung einer in der abstrakten Beschreibung (104, 200) enthaltenen Grundstruktur eines Regelkreises in einen konkreten Regelkreis (106) erfolgt:
- Ermitteln des zum zu generierenden Regelkreis gehörenden Stellglieds (z.B. 102,601) im konkreten Schema (101,600) anhand der in den Anwendervorgaben (103) enthaltenen Datensätze der Komponenten und darstellen des identifizierten Stellglieds in dem zu erstellenden Regelschema (700) (Schritte 301,401),
- Ermitteln der zugehörigen Istwertmessung anhand der in den Anwendervorgaben (103) enthaltenen Datensätze der Komponenten, mit Aufbau der Regelstrecke (711), wobei die Istwertmessung im Regelschema (700) an einem ersten Ende (z.B. links vom Stellglied) angeordnet wird (Schritte 402, 403),
- Ermitteln des restlichen, zur vollständigen Regelungsstruktur (202) und zum vollständigen Regel schema (700) gehörenden Teils des Regelkreises durch Erfassen der zugehörigen Komponenten anhand der Datensätze der Komponenten in - vom identifizierten Stellglied ausgehend - entgegengesetzter Richtung, mit entsprechender Anordnung im Regelschema (700) (also z.B. rechts vom Stellglied) (Schritt 404),
- Konkretisieren der Regelungsstruktur (202), indem die zugehörigen Funktionsbausteine (208) iterativ anhand der im Expertensystem vorhandenen Regeln ermittelt und im Regel schema (700) - einschließlich der zugehörigen Verbindungen (z.B. 203) dargestellt werden (Schritte 405,501,502), und
- Verbinden der Istwerteingänge der Funktionsbausteine (208) mit der jeweils zugehörigen Istwertmessung (Schritt 406).

2. Verfahren nach Anspruch 1, dadurch gekennzeichnet, daß neben der abstrakten Beschreibung (104) zusätzlich abstrakte Beschreibungen von Regelungs-Zusatzaufgaben (105) vorhanden sind und verwendet werden, die eine Realisierung von Regelungsaufgaben-Varianten ermöglichen, indem nach der Konkretisierung eines Funktionsbausteins (Schritte 501,502) jeweils die Iteration angehalten wird, und entsprechend den Anwendervorgaben (103) eine Konkretisierung der Zusatzaufgaben erfolgt mit Einfügung in die Regel struktur (202) und in das Regelschema (700) (Schritte 504, 505).

3. Verfahren nach Anspruch 2, dadurch gekennzeichnet, daß Störmeldungen der relevanten Meßwerterfassung auf die Antriebsfunktion des Stellgliedes aufgeschaltet werden, wodurch bei Störung die Regelung auf Handbetrieb gesetzt wird.

## Claims

1. A method for the automatic generation single control loops (106) of the single functional plane of a technical process or partial process, in particular of a power plant process, and for the graphical representation of the control loops (106) in control diagrams (700) by using a data processing device and an expert system stored in the same, with
a) a concrete process diagram (101, 600) for the technical process being used which comprises a process control section (107) with components (e.g. 102, 601, 605, 609, 611) which are each assigned a data record for the description of their properties, and the connection lines (620) with directional media flow information (619);
b) the expert system comprising an abstract description (104, 200) of at least one single control loop and rules for the generation of a concrete control loop (106) based on the same, with the abstract control loop description (e.g. 200) containing:
- a control section (201) with components (207) such as actuator, components of the process section, measurement of actual value;
- function blocks (208) of a closed-loop control structure (202) such as positioning, loop controller, formation of difference and definition of setpoint value and
- links (e.g. 203) of the process and process control connections;
c) user defaults (103) being present which define the closed-loop control tasks with data for actual value (e.g. of a process measurement), setpoint value (e.g. as a fixed default value), actuator (e.g. control valve), type of controller (e.g. PI controller) and effect of actual value signal on the control deviation (e.g. "higher", "lower") and
d) the implementation of a basic structure of a control loop contained in the abstract description (104, 200) into a concrete control loop (106) being made in the following steps:
- determination of the actuator (e.g. 102, 601) belonging to the control loop to be generated in the concrete diagram (101, 600) on the basis of the data records of the components contained in the user defaults (103) and representation of the identified actuator in the control diagram (700) to be produced (steps 301, 401);
- determination of the associated actual value measurement on the basis of the data records of the components contained in the user defaults (103), including the establishment of the control section (711), with the actual value measurement being arranged in the control diagram (700) at a first end (e.g. left from the actuator) (steps 402, 403);
- determination of the remaining part of the control loop belonging to the closed-loop control structure (202) and the complete control diagram (700) by acquiring the associated components on the basis of the data records of the components in the opposite direction starting out from the identified actuator, with respective arrangement in the control diagram (700) (i.e. to the right of the actuator) (step 404);
- specification of the closed-loop control structure (202) by determining the associated function blocks (208) iteratively on the basis of the rules present in the expert system and by representation in the control diagram (700), including the associated connections (e.g. 203) (steps 405, 501, 502), and
- connection of the actual value inputs of the function blocks (208) with the respectively associated actual value measurement (step 406).

2. A method as claimed in claim 1, characterised in that in addition to the abstract description (104) additional abstract descriptions of additional closed-loop control tasks (105) are present and are used which allow a realisation of closed-loop control task variants by stopping the iteration after the specification of a function block (steps 501, 502) and a specification of the additional tasks is made according to the user defaults (103) with the insertion into the control structure (202) and the control diagram (700) (steps 504, 505).

3. A method as claimed in claim 2, characterised in that disturbance information of the relevant measured value detection is feed-forwarded to the drive function of the actuator, as a result of which the closed-loop control is set to manual operation during a disturbance.

## Revendications

1. Procédure de génération automatique de boucles d'asservissement simples (106) du niveau fonctionnel élémentaire d'un processus ou d'une partie de processus technique, processus de centrale électrique notamment, et de représentation graphique de la boucle d'asservissement (106) sur des schémas de régulation (700), recourant à une installation informatique et à un système expert mémorisé dans ladite installation,
a) reposant sur un schéma processuel concret (101, 600) pour le processus technique, ledit schéma présentant un système processuel asservi (107) avec des composants (p. ex. 102, 601, 605, 609, 611) auxquels sont respectivement affectés des articles décrivant leurs caractéristiques, et comportant des conduites de liaison (620) avec information sur le sens de circulation du milieu (619),
b) où le système expert comprend une description abstraite (104, 200) au moins d'une boucle d'asservissement simple, ainsi que des règles de génération d'une boucle d'asservissement concrète (106) basée sur elle, la description abstraite de boucle d'asservissement simple (p. ex. 200) comportant:
- un système asservi (201) avec des composants (207) tels que composant de réglage, composants du système asservi, mesure de valeur effective p. ex,
- des composants fonctionnels (208) d'une structure de régulation (202), tels que positionnement, asservisseur, formation de différence et valeur de consigne par défaut,
- et des raccordements (p. ex. 203) des complexes processuel et de commande,
c) où sont présentés des préalables d'utilisateur (103) définissant des tâches de régulation, avec des indications de valeur effective (p. ex. une mesure de processus), valeur de consigne (p. ex. comme valeur paramétrée fixement par défaut), composant de réglage (p. ex. une vanne-pilote), type d'asservisseur (p. ex. un asservisseur PI), et influence du signal de valeur effective sur la déviation de réglage (p. ex. "supérieur", "inférieur"), et
d) où, en des phases successives, est effectuée la conversion d'une structure de base d'une boucle d'asservissement comprise dans la description abstraite (104, 200) en une boucle d'asservissement concrète (106):
- recherche du composant de réglage (p. ex. 102, 601) du schéma concret (101, 600) appartenant à la boucle d'asservissement à générer, à partir des articles des composants compris dans les préalables d'utilisateur (103), et présentation du composant de réglage identifié dans le schéma de régulation à établir (700) (phases 301, 401),
- recherche de la mesure de valeur effective associée à partir des articles des composants compris dans les préalables d'utilisateur (103), avec constitution du système asservi (711), la mesure de valeur effective du schéma de régulation (700) étant placée à une première extrémité (p. ex. à gauche du composant de réglage) (phases 402, 403),
- recherche de la partie restante de la boucle d'asservissement appartenant à la structure complète de régulation (202) et au schéma complet de régulation (700), par saisie des composants associés à partir des articles des composants en direction opposée - en partant du composant de réglage identifié, avec placement correspondant dans le schéma de régulation (700) (soit p. ex. à droite du composant de réglage) (phase 404),
- concrétisation de la structure de régulation (202), par recherche itérative des composants fonctionnels associés (208) à partir des règles présentes dans le système expert, et par représentation dans le schéma de régulation (700) - incluant les liaisons associées (p. ex. 203) (phases 405, 501, 502), et
- rattachement des entrées de valeur effective des composants fonctionnels (208) avec chaque mesure de valeur effective associée (phase 406).

2. Procédure selon revendication 1, caractérisée en ce qu'outre la description abstraite (104) sont présentées et utilisées d'autres descriptions abstraites de tâches complémentaires de réglage (105), lesquelles permettent la réalisation de variantes de tâches de régulation en arrêtant l'itération correspondante après concrétisation d'un composant fonctionnel (phases 501, 502), et en ce qu'une concrétisation des tâches complémentaires est effectuée en fonction des préalables d'utilisateur (103), avec insertion dans la structure de régulation (202) et dans le schéma de régulation (700) (phases 504, 505).

3. Procédure selon revendication 2, caractérisée en ce que les messages d'erreur de la saisie de valeur de mesure correspondante sont rattachés à la fonction de commande du composant de réglage, ce par quoi la régulation se trouve commutée sur service manuel en cas de perturbation.
